# EUROPEAN PATENT APPLICATION

(11) **EP 4 002 587 A1**
(43) Date of publication of application: **25.05.2022**
(21) Application number: 21206034.7
(22) Date of filing: 02.11.2021
(51) Int. Cl.: H01Q 3/24, H01Q 3/44, H01Q 21/26, H01Q 9/28, H01Q 21/20, H01Q 1/22

(54) **RECONFIGURABLE ANTENNA AND COMMUNICATIONS DEVICE**

(30) Priority: 16.11.2020 CN 202011277940
(71) Applicant: Huawei Technologies Co., Ltd., Shenzhen, Guangdong 518129 (CN)
(72) Inventor: ZHANG, Qian, Guangdong, 518129 (CN); YU, Min, Guangdong, 518129 (CN); LUO, Xin, Guangdong, 518129 (CN); CHEN, Yi, Guangdong, 518129 (CN)
(74) Representative: Pfenning, Meinig & Partner mbB

(57) **Abstract**

This application relates to the field of antenna technologies, and in particular, to a reconfigurable antenna and a communications device. The reconfigurable antenna includes a first antenna and a second antenna. The first antenna is an omnidirectional antenna, and the second antenna surrounds the first antenna. The second antenna includes a plurality of antenna element groups. Each antenna element group includes a transmission cable, a switch, a first antenna element, and a second antenna element. The transmission cable is connected to the first antenna element and the second antenna element. The transmission cable is connected to a feedpoint. The switch is connected to a first point and a second point on the transmission cable. A sum of a length from an end of the first antenna element to a connection point between the first antenna element and a first end of the transmission cable, a length from the first end of the transmission cable to the first point on the transmission cable, a length from a second end of the transmission cable to the second point on the transmission cable, and a length from an end of the second antenna element to a connection point between the second antenna element and the second end of the transmission cable is slightly greater than 1/2λ₁, and λ₁ is a wavelength of an electromagnetic wave on an operating frequency of the first antenna. The reconfigurable antenna in this application can be switched among an omnidirectional mode, a directional mode, and a high-density mode.

## Description

### TECHNICAL FIELD

This application relates to the field of antenna technologies, and in particular, to a reconfigurable antenna and a communications device.

### BACKGROUND

With development of a wireless communications and information system, the communications system also imposes diversified requirements on antennas, for example, broadband, intelligence, integration, and cost-effectiveness. Therefore, antenna design technologies such as aperture sharing, reconfigurability, and beamforming have received much attention, and are of great research significance in antenna development.

Because the antenna has different application scenarios, different types of beams need to be radiated based on an antenna position and different population density. However, a current antenna can radiate only one or two types of beams, and a structure of an antenna that can radiate two types of beams is complex.

Therefore, an antenna with a radiation range that can be applied to different environments is urgently required.

### SUMMARY

This application provides a reconfigurable antenna that can be switched among an omnidirectional mode, a directional mode, and a high-density mode, so that the reconfigurable antenna can respectively radiate an omnidirectional beam, a directional beam, and a high-density beam. According to a first aspect, this application provides a reconfigurable antenna. The reconfigurable antenna includes a first antenna and a second antenna. The first antenna is an omnidirectional antenna, and the second antenna surrounds the first antenna. The second antenna includes a plurality of antenna element groups. Each antenna element group in the plurality of antenna element groups includes a transmission cable, a switch, and two antenna elements. A first end of the transmission cable is connected to a first antenna element in the two antenna elements. A second end of the transmission cable is connected to a second antenna element in the two antenna elements. The transmission cable is connected to a feedpoint. The switch is connected to a first point and a second point on the transmission cable. A sum of a length from an end of the first antenna element to a connection point between the first antenna element and the first end of the transmission cable, a length from the first end of the transmission cable to the first point on the transmission cable, a length from the second end of the transmission cable to the second point on the transmission cable, and a length from an end of the second antenna element to a connection point between the second antenna element and the second end of the transmission cable is slightly greater than 1/2λ₁, and λ₁ is a wavelength of an electromagnetic wave on an operating frequency of the first antenna.

The reconfigurable antenna in this application may be switched among an omnidirectional mode, a directional mode, and a high-density mode based on an application scenario, so that the reconfigurable antenna can respectively radiate an omnidirectional beam, a directional beam, and a high-density beam. This reduces a quantity of antennas and a space usage of the antenna. Specifically, when the first antenna (the omnidirectional antenna) operates, no energy is fed to the feedpoint in each antenna element group in the second antenna, and the switch in each antenna element group is turned off, only the first antenna (the omnidirectional antenna) in the reconfigurable antenna operates, so that the reconfigurable antenna can radiate an omnidirectional electromagnetic wave. When the first antenna (the omnidirectional antenna) operates, switches in some antenna element groups in the second antenna are turned off, and switches in some other antenna element groups are turned on, because in each of the antenna element groups whose switches are turned on, the sum of the length of the first antenna element, the length of the second antenna element, the length from the first point to the first end of the transmission cable, and the length from the second point to the second end of the transmission cable is slightly greater than 1/2λ₁, the antenna element groups whose switches are turned on are used as reflectors to reflect an electromagnetic wave radiated by the first antenna in the directions of the antenna element groups, so that the electromagnetic wave radiated by the first antenna is radiated in directions of the antenna element groups whose switches are not turned on in the second antenna. Therefore, the reconfigurable antenna can radiate an electromagnetic wave in a predetermined direction. In addition, the second antenna surrounds the first antenna, in other words, a diameter of the second antenna is greater than a diameter of the first antenna. When the first antenna (the omnidirectional antenna) does not operate, energy is fed to the feedpoint in each antenna element group in the second antenna, and the switch in each antenna element group is turned off, an included angle between a beam radiated by the second antenna and a horizontal plane is increased, so that a beam coverage area is decreased. In this case, the reconfigurable antenna can radiate a high-density electromagnetic wave.

It should be noted that when a skilled person assembles the reconfigurable antenna, in each antenna element group, the transmission cable first connects two antenna elements, and then the feedpoint is connected to the transmission cable. When the feedpoint is connected, it is ensured that lengths of transmission paths from the feedpoint to the two antenna elements through the transmission cable are the same. In addition, positions of the feedpoints in the antenna element groups are the same.

In a possible implementation, a sum of lengths of the two antenna elements is 0.5―1.2λ₂, and λ₂ is a wavelength of an electromagnetic wave on an operating frequency of the second antenna. Therefore, an electromagnetic wave radiated by the reconfigurable antenna in the high-density mode falls within a preset range.

In a specific implementation process, to ensure that the second antenna in the reconfigurable antenna can implement a function of the reflector, a distance between the antenna element in the second antenna and the first antenna is 0.2―0.3λ₁.

In a possible implementation, a shape of the antenna element in each antenna element group is an arc, so that the plurality of antenna element groups surround the first antenna to form a circle. A distance between each antenna element and a center of the reconfigurable antenna is 0.5―0.7λ₂.

In a specific solution, there may be two, three, four, or five antenna element groups. When there are two antenna element groups, the two antenna element groups may be symmetrically disposed on two sides of the first antenna. When there are four antenna element groups, the antenna element groups may be disposed in an annular shape in a circumference of the first antenna.

In a possible implementation, both the first antenna and the second antenna are integrated on a substrate.

In the foregoing solution, the first antenna is configured as an omnidirectional antenna. Specifically, the first antenna may include a plurality of first antenna element groups. Each first antenna element group includes two third antenna elements and a first transmission cable that connects the two third antenna elements, and a first feedpoint is connected to the first transmission cable. In each first antenna element group, distances between the first feedpoint and the two third antenna elements are the same. When the first antenna radiates an omnidirectional electromagnetic wave, energy is simultaneously fed to the first feedpoints in the first antenna element groups.

It should be noted that ends that are of two first transmission cables in two adjacent first antenna element groups and that are away from the third antenna element may be short-circuited, so that the first antenna can be disposed on the substrate more conveniently.

When the plurality of first antenna element groups are specifically disposed, the plurality of antenna element groups may be rotationally symmetric or centrosymmetric with respect to a center of the substrate.

In a specific solution, three, four, or five first antenna element groups may be specifically configured. When there are four first antenna element groups, the four first antenna element groups may be disposed in a circular shape. In this case, the second antenna disposed in the circumference of the first antenna may be disposed in a circular shape.

When the first antenna is specifically disposed, to ensure that the first antenna is an omnidirectional antenna during operating, a length of the third antenna element in each first antenna element group is 0.5―1λ₁, a length of the first transmission cable is 0.2―0.3λ₁, and a radius of the third antenna element is 0.2―0.4λ₁, where λ₁ is the wavelength of the electromagnetic wave on the operating working frequency of the first antenna.

According to a second aspect, this application further provides a communications device, where the communications device has the reconfigurable antenna in any one of the foregoing technical solutions. The communications device may be specifically configured as a base station or a Wi-Fi device.

### BRIEF DESCRIPTION OF DRAWINGS

FIG. 1 is a radiation range diagram of a reconfigurable antenna in three modes according to an embodiment of this application;
FIG. 2 is a schematic structural diagram of a reconfigurable antenna according to an embodiment of this application;
FIG. 3 is a schematic structural diagram of an antenna element group in a reconfigurable antenna according to an embodiment of this application;
FIG. 4 is a schematic structural diagram of a second antenna in a reconfigurable antenna according to an embodiment of this application;
FIG. 5 is a schematic structural diagram of a first antenna in a reconfigurable antenna according to an embodiment of this application; and
FIG. 6 is another schematic structural diagram of a reconfigurable antenna according to an embodiment of this application.

### Reference signs:

10: first antenna; 100: first antenna element group; 110: third antenna element; 120: first transmission cable; 130: first feedpoint; 20: second antenna; 200: antenna element group; 210: first antenna element; 220: transmission cable; 230: feedpoint; 240: switch; 250: second antenna element; and 30: substrate.

### DESCRIPTION OF EMBODIMENTS

To make objectives, technical solutions, and advantages of this application clearer, the following further describes this application in detail with reference to the accompanying drawings.

To facilitate understanding of a reconfigurable antenna in this application, a principle of the antenna is described. A Yagi antenna is used as an example. The Yagi antenna includes three pairs of antenna elements, the three pairs of antenna elements are disposed in parallel, and the three pairs of antenna elements are all disposed on a metal beam. An antenna element connected to a feeder is referred to as an active antenna element or a main antenna element that is located in the middle of the three pairs of antenna elements. An antenna element slightly longer than the active antenna element is referred to as a reflector. The reflector is on one side of the active antenna element, and is used to weaken an electromagnetic wave transmitted from the direction of the reflector or an electromagnetic wave transmitted from this antenna to the reflector.

The main antenna element is equal to a half wavelength, the reflector is slightly longer than the half wavelength, and two antenna elements are spaced by a quarter wavelength. In this case, a director is "capacitive" to an induction signal whose current is advanced by 90° relative to a voltage.

An electromagnetic wave induced by the director is radiated to the main antenna element. A radiation signal is lagged by 90° after passing through a quarter-wavelength path. This exactly cancels out the "advance" caused above. Phases of electromagnetic fields of the director and the main antenna element are the same. Therefore, signals are superimposed for enhancement. The reflector is slightly longer than the half wavelength and has inductive reactance, where a current is lagged by 90°. In addition, there is another 90° lag in a process of radiation to the main antenna element. They are added to obtain 180° exactly. This has a cancellation function. Enhancement is performed in a direction, and weakening is performed in another direction, so that superdirectivity is obtained. A function and a process in a transmit state are similar.

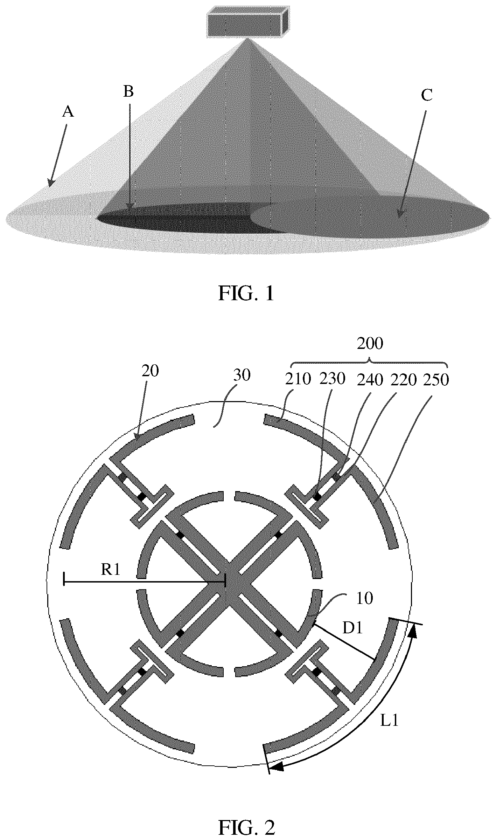

Generally, the reconfigurable antenna can radiate an omnidirectional beam, a high-density beam, and a directional beam. When the reconfigurable antenna presents 360° uniform radiation on a horizontal plane, and an included angle between a maximum radiation direction on a pitch plane and a downward direction perpendicular to the antenna is 70° to 80°, the reconfigurable antenna radiates the omnidirectional beam. When the included angle between the maximum radiation direction on the pitch plane of the reconfigurable antenna and the downward direction perpendicular to the antenna is decreased to enable beams to be concentrated in a relatively small coverage area, the reconfigurable antenna radiates the high-density beam. The high-density beam may reduce an overlapping area between two adjacent Wi-Fi devices to reduce interference and noise. When the reconfigurable antenna no longer presents 360° uniform radiation on the horizontal plane, but presents directivity, the reconfigurable antenna radiates the directional beam. Refer to FIG. 1. An area A is a signal radiation area existing when the reconfigurable antenna is in an omnidirectional mode, an area B is a signal radiation area existing when the reconfigurable antenna is in a high-density mode, and an area C is a signal radiation area existing when the reconfigurable antenna is in a directional mode. However, a current reconfigurable antenna can radiate only one or two of the omnidirectional beam, the directional beam, and the high-density beam. In addition, when the reconfigurable antenna can be switched between the omnidirectional mode and the directional mode, a structure of the reconfigurable antenna is complex, and a quantity of reconfigurable antennas and space occupied by the antenna are increased.

Therefore, this application provides a reconfigurable antenna that can be switched among the omnidirectional mode, the directional mode, and the high-density mode to respectively radiate the omnidirectional beam, the directional beam, and the high-density beam.

To make the objectives, technical solutions, and advantages of this application clearer, with reference to accompanying drawings and specific embodiments, the following further describes in detail the reconfigurable antenna provided in this application.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment, instead, they mean "one or more but not all of the embodiments", unless otherwise specifically emphasized in other ways. The terms "include", "comprise", "have", and variants of the terms all mean "include but are not limited to", unless otherwise specifically emphasized in other ways.

In the embodiments provided in this application, the reconfigurable antenna has three modes: the omnidirectional mode, the directional mode, and the high-density mode, so that the reconfigurable antenna can be switched among the omnidirectional mode, the directional mode, and the high-density mode based on an application scenario of the reconfigurable antenna. This reduces a quantity of antennas and a space usage of the antenna.

First, λ₁ and λ₂ are described, where λ₁ is a wavelength of an electromagnetic wave on an operating frequency of a first antenna, and λ₂ is a wavelength of an electromagnetic wave on an operating frequency of a second antenna.

Specifically, in FIG. 2, the reconfigurable antenna may include a first antenna 10 and a second antenna 20. The first antenna 10 is an omnidirectional antenna, and the second antenna 20 surrounds the first antenna. To enable the reconfigurable antenna to be switched among the omnidirectional mode, the directional mode, and the high-density mode, the second antenna may specifically include a plurality of antenna element groups 200. Each antenna element group 200 may include a transmission cable 220, a switch 240, and two antenna elements. The two antenna elements may be respectively a first antenna element 210 and a second antenna element 250. A first end of the transmission cable 220 is connected to the first antenna element 210, a second end of the transmission cable 220 is connected to the second antenna element 250, and the transmission cable is connected to a feedpoint 230. In addition, a first point and a second point that are used to connect to the switch 240 are disposed on the transmission cable 220, and a sum of a length from an end of the first antenna element 210 to a connection point between the first antenna element 210 and the first end of the transmission cable 220, a length from the first end of the transmission cable 220 to the first point on the transmission cable 220, a length from the second end of the transmission cable 220 to the second point on the transmission cable 220, and a length from an end of the second antenna element 250 to a connection point between the second antenna element 250 and the second end of the transmission cable 220 is slightly greater than 1/2λ₁. When the first antenna 10 (the omnidirectional antenna) operates, no energy is fed to the plurality of feedpoints 230 in the plurality of antenna element groups 200, and the plurality of switches 240 are all turned off, the reconfigurable antenna is in the omnidirectional mode. When the first antenna 10 (the omnidirectional antenna) operates, a switch 240 in at least one antenna element group 200 in the plurality of antenna element groups 200 is turned on, at least one switch 240 in the plurality of antenna element groups 200 is turned off, and no energy is fed to the feedpoints 230 in the plurality of antenna element groups 200, a first antenna element 210 and a second antenna element 250 in the antenna element group 200 whose switch 240 is turned on may be used as a reflector to reflect an electromagnetic wave radiated by the first antenna 10 to the reflector, so that the reconfigurable antenna is in the directional mode. When the first antenna 10 (the omnidirectional antenna) does not operate, energy is fed to the feedpoint 230 in each antenna element group 200 in the plurality of antenna element groups 200, and the switch 240 in each antenna element group 200 is turned off, an included angle between a beam radiated by the second antenna 20 and a horizontal plane is increased, and a beam coverage area is decreased, so that the reconfigurable antenna is in the high-density mode.

It should be noted that both the first antenna 10 and the second antenna 20 may be integrated on a substrate 30.

Still refer to FIG. 2. When the second antenna 20 is specifically disposed, a sum of lengths of the first antenna element 210 and the second antenna element 250 in each antenna element group 200 is L1. A spacing between the first antenna and each of the first antenna element 210 and the second antenna element 250 in each antenna element group 200 is D1. A distance between a center of the first antenna and each of the first antenna element 210 and the second antenna element 250 in each antenna element group 200 is R1. Specifically, L1 is 0.5―1.2λ₂. Therefore, in the reconfigurable antenna, when the first antenna 10 does not operate, energy is fed to the feedpoints 230 in the second antenna 20, and the switches 240 in the second antenna 20 are all turned off, the reconfigurable antenna is in the high-density mode, and the reconfigurable antenna can radiate an electromagnetic wave within a preset area. D1 is 0.2―0.3λ₁, and R1 is 0.5―0.7λ₂, so that the second antenna 20 in the reconfigurable antenna can be used as a reflector or a structure in the high-density mode.

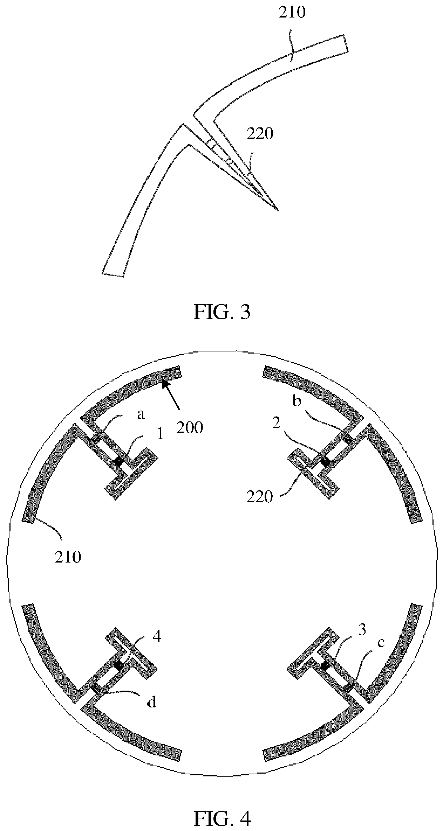

Still refer to FIG. 2. In each antenna element group 200, to ensure that paths on which energy fed to the feedpoint 230 connected to the transmission cable 220 is transmitted to the first antenna element 210 and the second antenna element 250 are the same, the transmission cable 220 may be specifically configured in a plurality of forms. For example, the transmission cable 220 may include a first conductor and a second conductor. The first conductor and the second conductor each have a first end and a second end, the first end of the first conductor is connected to the first antenna element 210, the first end of the second conductor is connected to the second antenna element 250, and the second end of the first conductor and the second end of the second conductor are connected to each other. The first conductor and the second conductor may be symmetrically distributed, a part of the first conductor and a part of the second conductor may be parallel to each other, and another part of the first conductor and another part of the second conductor may be bent. Alternatively, in FIG. 3, the transmission cable 220 includes two conductors respectively connected to the first antenna element and the second antenna element. Ends, of the two conductors, away from the first antenna element and the second antenna element are connected to each other (that is, the two conductors are disposed in a V shape).

It should be noted that the transmission cable 220 may have another type of form. Forms of the first conductor and the second conductor that are included in the transmission cable 220 may be different, and the first conductor and the second conductor may be curves that are symmetrically disposed, provided that the transmission cable 220 can implement sufficient impedance matching. In the foregoing solution, there may be two, three, four, five, or six antenna element groups 200. Specifically, in FIG. 4, when there are four antenna element groups 200, the four antenna element groups 200 are disposed in a circular shape (that is, antenna elements are disposed in an arc shape). In this case, the first antenna disposed in an inner circumference of the plurality of antenna element groups 200 may also be disposed in a circular shape. With reference to FIG. 2 and FIG. 4, in a clockwise direction, four switches 240 (a, b, c, and d) and four feedpoints 230 (1, 2, 3, and 4) are respectively disposed in the four antenna element groups 200 included in the second antenna 20. When the reconfigurable antenna is in the omnidirectional mode, the first antenna 10 operates, the four switches 240 (a, b, c, and d) in the second antenna 20 are all turned off, and no energy is fed to the four feedpoints 230 (1, 2, 3, and 4) in the second antenna 20. When the reconfigurable antenna is in the directional mode, the first antenna 10 operates, and no energy is fed to the four feedpoints 230 (1, 2, 3, and 4) in the second antenna 20. In the four switches 240 (a, b, c, and d), any switch 240 in a, b, c, and d may be turned on, and the other three switches 240 are turned off. In this case, an antenna element group 200 whose switch 240 is turned on is used as a reflector, so that a signal of the reconfigurable antenna is radiated in directions of antenna element groups 200 provided with the three turned off switches 240. Alternatively, in the four switches 240 (a, b, c, and d), only one switch 240 is turned off, and the other three switches 240 are turned on. In this case, antenna element groups 200 whose switches 240 are turned on are used as reflectors, so that a signal of the reconfigurable antenna is radiated in a direction of an antenna element group 200 provided with the turned off switch. Alternatively, in the four switches (a, b, c, and d), any two switches 240 in a, b, c, and d may be turned on, and the other two switches 240 are turned off. In this case, antenna element groups 200 whose switches 240 are turned on are used as reflectors, so that a signal of the reconfigurable antenna is radiated in directions of antenna element groups 200 provided with the two turned off switches 240. When the reconfigurable antenna is in the high-density mode, the first antenna 10 does not operate, energy is fed to all the four feedpoints 230 (1, 2, 3, and 4) in the second antenna 20, and the switch 240 in each antenna element group 200 is turned off.

The switch 240 may be a diode.

It should be noted that, to adjust a size obtained after the first antenna element and the second antenna element in each antenna element group are connected and a size of the reflector as which the first antenna element and the second antenna element are used, both the switch and the feedpoint that are located on the transmission cable may be adjusted relative to a position of the transmission cable during assembly, the feedpoint is disposed between the switch and the second antenna element, and the switch and the feedpoint do not overlap.

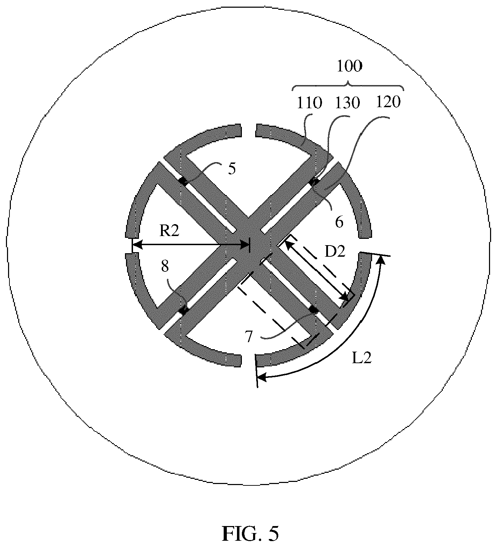

Refer to FIG. 5. In the foregoing solution, the first antenna is configured as an omnidirectional antenna. Specifically, the first antenna may include a plurality of first antenna element groups 100, the first antenna element group 100 may include a first transmission cable 120 and two third antenna elements 110, and the first transmission cable 120 is configured to connect the two third antenna elements 110. A first feedpoint 130 is disposed on the first transmission cable 120, and paths on which energy is transmitted from the first feedpoint 130 to the two third antenna elements 110 are the same. When the first antenna 10 operates, energy is simultaneously fed to the first feedpoints 130 in the first antenna element groups 100.

In a specific solution, there may be specifically three, four, five, or six first antenna element groups 100. When three first antenna element groups 100 are configured, the three first antenna element groups 100 may be disposed in a circular shape, and the three first antenna element groups 100 may further be rotationally symmetric with respect to a center of a circle. In this case, the third antenna element 110 in each first antenna element group 100 may be disposed in an arc shape. When four first antenna element groups 100 are configured, the four first antenna element groups 100 may be disposed in a circular, rectangular, or rhombic shape. In this case, the third antenna element in each first antenna element group may be disposed in a linear shape.

It should be noted that when three first antenna element groups are disposed, three antenna element groups may be disposed, and the antenna element groups are distributed in a one-to-one correspondence with the first antenna element groups in a radial direction of the substrate. Alternatively, when three first antenna element groups are disposed, four antenna element groups may be disposed. Quantity configuration requirements of the first antenna element group and the antenna element group are not specifically limited, provided that the reconfigurable antenna can be switched among the omnidirectional mode, the directional mode, and the high-density mode. Still refer to FIG. 5. In a specific solution, to enable the first antenna to be disposed on the substrate more conveniently, ends that are of two first transmission cables 120 in two adjacent first antenna element groups 100 and that are away from the third antenna element 110 may be connected to each other, that is, the two first transmission cables 120 in the two adjacent first antenna element groups 100 are short-circuited.

Still refer to FIG. 5. The first antenna is an omnidirectional antenna to ensure that paths on which energy fed to the first feedpoint 130 in each first antenna element group 100 moves to the two third antenna elements 110 in the first antenna element group 100 are the same. The first transmission cable 120 may have a plurality of specific structural forms. For example, the first transmission cable 120 includes two third conductors, and the two third conductors each have a first end and a second end. The first ends of the two third conductors are respectively connected to the two third antenna elements 110. When the two third conductors are disposed in parallel, the first transmission cable 120 further includes a first connection line, and the first connection line connects the second ends of the two third conductors. The first feedpoint 130 is disposed between the two parallel third conductors, and lengths of third conductors between the third antenna elements 110 and connection points between the first feedpoint 130 and the two third conductors are the same. Alternatively, when the two third conductors are disposed in a V shape (not shown in the figure), the first ends of the two third conductors are respectively connected to the two third antenna elements 110, and the second ends of the two third conductors may be connected to each other. The first feedpoint is disposed between the two third conductors, and lengths of third conductors between the third antenna elements 110 and connection points between the first feedpoint 130 and the two third conductors are the same.

It should be noted that a position of the first feedpoint on the first transmission cable is adjustable to adjust signal radiation strength of the first antenna.

Still refer to FIG. 5. When the first antenna is specifically disposed, a sum of lengths of the two third antenna elements 110 in each first antenna element group 100 is L2, a distance between the third antenna element 110 in each first antenna element group 100 and the center of the first antenna is R2, and a length from an end that is of the first transmission cable and that is connected to the third antenna element 110 to an end away from the third antenna element 110 is D2. Specifically, to ensure that the first antenna is an omnidirectional antenna during operating, L2 is 0.5―1λ₁, D2 is 0.2―0.3λ₁, and R2 is 0.2―0.4λ₁. Specifically, a size of each part of the first antenna meets a specified range to ensure that the first antenna can radiate an omnidirectional electromagnetic wave.

With reference to FIG. 2 and FIG. 5, there are four first antenna element groups 100, and the four first antenna element groups 100 are disposed in an annular shape. There are also four antenna element groups 200, and the four antenna element groups 200 are disposed in a circular shape. In the clockwise direction, four first feedpoints 130 (5, 6, 7, and 8) are respectively disposed in the four first antenna element groups 100 included in the first antenna 10. When the reconfigurable antenna is in the omnidirectional mode and the directional mode, energy is simultaneously fed to the four first feedpoints 130 (5, 6, 7, and 8) in the first antenna 10.

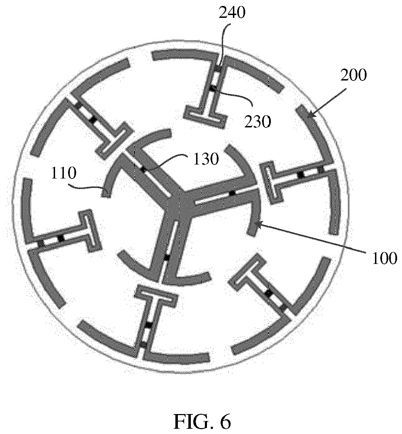

Refer to FIG. 6. The first antenna includes three first antenna element groups 100, the second antenna includes six antenna element groups 200, the three first antenna element groups 100 are disposed in a circular shape, the six antenna element groups 200 are also disposed in a circular shape, and the three first antenna element groups 100 correspond to three of the six antenna element groups 200. When energy is simultaneously fed to three first feedpoints 130 disposed in the three first antenna element groups 100, no energy is fed to six feedpoints 230 in the six antenna element groups 200, and six switches 240 in the six antenna element groups 200 are all turned off, the reconfigurable antenna is in the omnidirectional mode. When energy is simultaneously fed to the three first feedpoints 130 disposed in the three first antenna element groups 100, and no energy is fed to the six feedpoints 230 in the six antenna element groups 200, one switch 240 in the six switches 240 in the six antenna element groups 200 may be turned on, or two switches 240 in the six switches 240 may be turned on. Three switches 240 in the six antenna element groups 200 may be turned on, a maximum of five switches 240 in the six switches 240 may be turned on, and at least one switch 240 in the six switches 240 needs to be turned off. In this way, a beam is radiated in a direction of an antenna element group 200 whose switch 240 is turned off, so that the reconfigurable antenna is in the directional mode. When no energy is fed to the three first feedpoints 130 disposed in the three first antenna element groups 100, energy is simultaneously fed to the six feedpoints 230 in the six antenna element groups 200, and the six switches 240 in the six antenna element groups 200 are all turned off, the reconfigurable antenna is in the high-density mode.

This application further provides a communications device, where the communications device has the reconfigurable antenna in any one of the foregoing technical solutions. The communications device may be specifically configured as a base station or a Wi-Fi device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A reconfigurable antenna, comprising:
a first antenna, wherein the first antenna is an omnidirectional antenna; and
a second antenna, wherein the second antenna surrounds the first antenna, wherein
the second antenna comprises a plurality of antenna element groups, each antenna element group in the plurality of antenna element groups comprises a transmission cable, a switch, and two antenna elements, a first end of the transmission cable is connected to a first antenna element in the two antenna elements, a second end of the transmission cable is connected to a second antenna element in the two antenna elements, the transmission cable is connected to a feedpoint, and the switch is connected to a first point and a second point on the transmission cable, wherein a sum of a length from an end of the first antenna element to a connection point between the first antenna element and the first end of the transmission cable, a length from the first end of the transmission cable to the first point on the transmission cable, a length from the second end of the transmission cable to the second point on the transmission cable, and a length from an end of the second antenna element to a connection point between the second antenna element and the second end of the transmission cable is slightly greater than 1/2λ₁, and λ₁ is a wavelength of an electromagnetic wave on an operating frequency of the first antenna.

2. The reconfigurable antenna according to claim 1, wherein a sum of lengths of the two antenna elements is 0.5―1.2λ₂, and λ₂ is a wavelength of an electromagnetic wave on an operating frequency of the second antenna.

3. The reconfigurable antenna according to claim 1, wherein a distance between the first antenna and each of the first antenna element and the second antenna element is 0.2―0.3λ₁.

4. The reconfigurable antenna according to claim 1 or 2, wherein the feedpoint is connected to any position on the transmission cable, and a distance between the feedpoint and the first end of the transmission cable is the same as a distance between the feedpoint to the second end of the transmission cable.

5. The reconfigurable antenna according to any one of claims 1 to 4, wherein a shape of the antenna element in each antenna element group is an arc, and the elements in the plurality of antenna element groups surround the first antenna to form a circle.

6. The reconfigurable antenna according to any one of claims 1 to 5, wherein a distance between a center of the reconfigurable antenna and each of the first antenna element and the second antenna element is 0.5―0.7λ₂.

7. The reconfigurable antenna according to any one of claims 1 to 6, wherein there are four antenna element groups.

8. The reconfigurable antenna according to any one of claims 1 to 7, further comprising a substrate, wherein the first antenna and the second antenna are on the substrate.

9. The reconfigurable antenna according to any one of claims 1 to 8, wherein a shape of the first antenna is a circle.

10. A communications device, comprising the reconfigurable antenna according to any one of claims 1 to 9.
